# EUROPÄISCHE PATENTANMELDUNG

(11) **EP 2 835 198 A1**
(43) Veröffentlichungstag der Anmeldung: **11.02.2015**
(21) Anmeldenummer: 13179827.4
(22) Anmeldetag: 09.08.2013
(51) Int. Cl.: B23B 35/00, B23B 51/04, B28D 1/04

(54) **Intuitive, adaptive Anbohrfunktion**

(71) Anmelder: HILTI Aktiengesellschaft, 9494 Schaan (LI)
(72) Erfinder: Koslowski, Oliver, 86932 Pürgen (DE); Forstner, Markus, 86899 Landsberg (DE); Königbauer, Egon, 82223 Eichenau (DE); Fuchs, Michael, 86825 Bad Wörishofen (DE); Groer, Stefan, 86836 Graben (DE)
(74) Vertreter: Hilti Aktiengesellschaft Corporate Intellectual Property

(57) **Zusammenfassung**

Verfahren zum Steuern einer Werkzeugmaschine (1), insbesondere eine handgeführte Kernbohrmaschine, enthaltend einen Antrieb (10) zum Antreiben eines Werkzeugs (30) und eine Steuereinheit (40), beim Bearbeiten eines Werkstücks (W). Das Verfahren enthält die Verfahrensschritte
- Festlegen der Antriebsdrehzahl auf einen ersten Wert;
- Messen eines ersten Stromaufnahmewertes des Antriebs;
- Festlegen eines Schwellenwertes für die Stromaufnahme des Antriebs; und
- Erhöhen der Antriebsdrehzahl auf einen zweiten Wert, wenn die Stromaufnahme des Antriebs aufgrund einer Erhöhung der Antriebslast den Schwellenwert übersteigt.

Werkzeugmaschine (1) zur Anwendung des Verfahrens. Die Werkzeugmaschine enthält einen Antrieb (10) zum Antreiben eines Werkzeugs (30) und eine Steuereinheit (40) zur Steuerung wenigstens der Antriebsdrehzahl.

## Beschreibung

Die vorliegende Erfindung bezieht sich auf ein Verfahren zum Steuern einer Werkzeugmaschine, insbesondere eine handgeführte Kernbohrmaschine, enthaltend einen Antrieb zum Antreiben eines Werkzeugs und eine Steuereinheit, beim Bearbeiten eines Werkstücks.

Des Weiteren bezieht sich die Erfindung auf eine Werkzeugmaschine zur Anwendung dieses Verfahrens.

Bei der Werkzeugmaschine kann es sich z.B. um eine Kernbohrmaschine zum Kernbohren handeln.

Eine Kernbohrmaschine zerspant unter Zuhilfenahme einer zylinderförmigen Diamantbohrkrone eine ringförmige Nut in einen zu bearbeitenden Werkstoff, um in diesem einen zylindrischen Bohrkern zu bilden, der nach Fertigstellung des Kernbohrvorgangs als Ganzes aus dem Bohrloch entfernt werden kann. Bei dem zu bearbeitenden Werkstoff kann es sich beispielsweise um Beton, Mauerwerk, Gestein oder ähnliches handeln.

Ein derartiges Kernbohrgerät und ein dazugehöriges Verfahren zum Steuern dieses Kernbohrgeräts ist in der deutschen Offenlegungsschrift DE 10 2009 000 515 offenbart. Gemäß diesem Dokument des Stands der Technik wird in einer pneumatisch schlagenden Handwerkzeugmaschine die Beschleunigung längs einer Schlagachse der Handwerkzeugmaschine erfasst. Die Antriebsleistung der Handwerkzeugmaschine wird verringert, wenn die erfasste Beschleunigung größer als ein zuvor festgelegter Schwellwert ist. Der Schwellwert wird dabei so festgelegt, dass dieser größer als maximale Beschleunigungswerte ist, die bei einem schlagenden Betrieb der Handwerkzeugmaschine auf ein Werkstück auftreten.

Kernbohren, insbesondere mit handgeführten Kernbohrmaschinen, ist ein anspruchsvolles Arbeitsverfahren und verlangt in den einzelnen Arbeitsabschnitten eine Vielzahl an unterschiedlichen Tätigkeiten. Hierzu gehört beispielsweise das Anpassen der Parameter der Kernbohrmaschine auf sich verändernde Bedingungen oder auch das Variieren der Vorschubgeschwindigkeit des Werkzeugs (Bohrkrone) in den zu bearbeitenden Werkstoff. Bei handgeführten Kernbohrmaschinen kommt im Gegensatz zu ständergeführten Kernbohrmaschinen erschwerend hinzu, dass der Anwender die Kernbohrmaschine in den Händen halten, kontrollieren sowie führen muss. Da selbst handgeführte Kernbohrmaschinen für gewöhnlich relativ schwer sein können und die Arbeitsposition für den Anwender selten besonders angenehm ist, d.h. die Arbeitsposition ist sehr niedrig, sehr hoch oder sogar über dem Kopf des Anwenders, können bei der gleichzeitigen Beachtung aller wichtigen Parameter und der Durchführung der zahlreichen Tätigkeiten während es Kernbohrvorgangs viele Probleme auftreten. Speziell in der frühen Kernbohrphase, d.h. beim sogenannten Anbohren, können eine Menge Schwierigkeiten auftreten, die den gesamten Kernbohrvorgang und insbesondere das Kernbohrergebnis negativ beeinflussen können.

Aufgabe der vorliegenden Erfindung besteht daher in dem Bereitstellen eines Verfahrens zum Steuern einer Werkzeugmaschine enthaltend einen Antrieb zum Antreiben eines Werkzeugs und eine Steuereinheit beim Bearbeiten eines Werkstücks. Darüber hinaus besteht die Aufgabe der vorliegenden Erfindung ausserdem im Bereitstellen einer Werkzeugmaschine zur Anwendung dieses Verfahrens. Durch dieses erfindungsgemässe Verfahren sowie die erfindungsgemässe Werkzeugmaschine werden die vorstehend genannten Nachteile umgangen sowie die Bearbeitung des Werkstoffs sicherer und effizienter gestaltet.

Die Aufgabe wird im Wesentlichen durch die Merkmale des unabhängigen Anspruchs 1 und 5 gelöst. Weitere vorteilhafte Weiterentwicklungen ergeben sich aus den entsprechenden Unteransprüchen.

Demnach ist ein Verfahren zum Steuern einer Werkzeugmaschine, insbesondere eine handgeführte Kernbohrmaschine, enthaltend einen Antrieb zum Antreiben eines Werkzeugs und eine Steuereinheit, beim Bearbeiten eines Werkstücks vorgesehen, mit den Verfahrensschritten
- Festlegen der Antriebsdrehzahl auf einen ersten Wert;
- Messen eines ersten Stromaufnahmewertes des Antriebs;
- Festlegen eines Schwellenwertes für die Stromaufnahme des Antriebs; und
- Erhöhen der Antriebsdrehzahl auf einen zweiten Wert, wenn die Stromaufnahme des Antriebs aufgrund einer Erhöhung der Antriebslast den Schwellenwert übersteigt.

Des Weiteren ist eine Werkzeugmaschine zur Anwendung des Verfahrens vorgesehen, enthaltend
- einen Antrieb zum Antreiben eines Werkzeugs; und
- eine Steuereinheit zur Steuerung wenigstens der Antriebsdrehzahl.

Gemäss einer weiteren Ausgestaltungsform der vorliegenden Erfindung ist es vorteilhaft, ein Erhöhen der Antriebslast mittels Erhöhung einer Anpresskraft auf das Werkzeug zu erreichen. Da das Anpressen des Werkzeugs auf einen zu bearbeitenden Werkstoff mit einem höheren auf das Werkzeug wirkenden Widerstand verbunden ist, muss als Folge daraus die Antriebsleistung entsprechend erhöht werden, um einen gleichbleibenden Bohrvorschritt zu erreichen. Zum Erhöhen der Antriebsleistung ist es notwendig, dass auch die Stromaufnahme des Antriebs erhöht wird. Durch das Erhöhen der Antriebslast mittels Erhöhung einer Anpresskraft auf das Werkzeug kann auf effiziente Art erreicht werden, dass eine höhere Antriebsdrehzahl und damit eine höhere Antriebsleistung der Werkzeugmaschine automatisch zur Verfügung gestellt wird, wenn eine höhere Last in Form einer Anpresskraft auf das Werkzeug wirkt.

Des Weiteren ist es möglich, dass das Festlegen des Schwellenwertes in Abhängigkeit wenigstens eines Parameters der Werkzeugmaschine erfolgt. Hierdurch können sich verändernde Betriebsbedingungen, wie z.B. Temperatur der Werkzeugmaschine, alters- und abnutzungsbedingter Zustand der Werkzeugmaschine bzw. des Werkzeugs, verwendete Bohrkronengröße, Art des zu bearbeitenden Werkstoffs oder ähnliches, ausgeglichen und ein relativ konstantes Reagieren (Erhöhen der Antriebsdrehzahl) der Werkzeugmaschine unter verschiedenen Betriebsbedingungen erreicht werden.

Darüber hinaus ist es vorteilhaft, dass das Erhöhen der Antriebsdrehzahl auf einen zweiten Wert in Abhängigkeit zu der Dauer des Überschreitens des Schwellenwertes und der Größe des Schwellenwertes steht. Wenn beispielsweise ein relativ niedriger Schwellenwert für die Stromaufnahme des Antriebs festgelegt wird, ist es notwendig, dass die Stromaufnahme des Antriebs für eine relativ lange Zeitdauer diesen Schwellenwert übersteigt. Dementsprechend ist es auch nur notwendig, dass die Stromaufnahme des Antriebs für eine relativ kurze Zeitdauer einen entsprechend hohen Schwellenwert übersteigt, um hierdurch bereits die Antriebsdrehzahl auf einen zweiten Wert zu steigern. Mit diesem Merkmal kann erreicht werden, dass nicht frühzeitig die Antriebsdrehzahl auf einen zweiten Wert erhöht wird, wenn der Schwellenwert eine relativ niedrige Grösse einnimmt.

Die Erfindung wird bezüglich vorteilhafter Ausführungsbeispiele näher erläutert, hierbei zeigt
- Fig. 1: eine erfindungsgemässe Werkzeugmaschine mit einem Antrieb, Steuereinheit, Antriebswelle und Werkzeug; und
- Fig. 2: Ablaufdiagram des erfindungsgemässen Verfahrens zum Steuern einer Werkzeugmaschine beim Bearbeiten eines Werkstücks.

### Ausführungsbeispiel

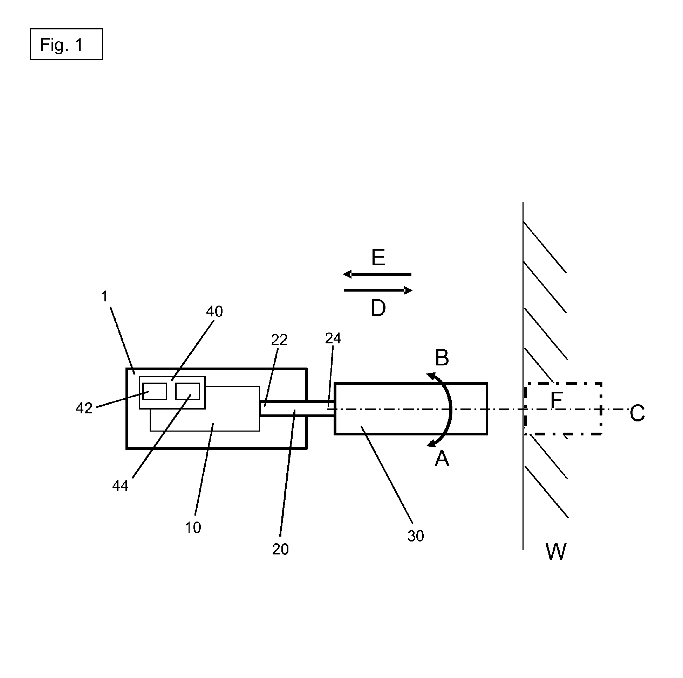

Fig. 1 zeigt eine handgeführte Werkzeugmaschine zum Bearbeiten eines Werkstoffs, wie z.B. Beton, Gestein, Mauerwerk oder ähnlichem.

Die Werkzeugmaschine 1 ist in Form einer handgeführten Kernbohrmaschine ausgestaltet und enthält einen Antrieb 10, eine Antriebswelle 20, ein Werkzeug 30 in Form einer Bohrkrone und eine Steuereinheit 40.

Der Antrieb 10 ist in Form eines Elektromotors gestaltet, es ist jedoch auch möglich jeden anderen geeigneten Motor oder Antriebsmöglichkeit zu verwenden.

Die Antriebswelle 20 ist mit einem ersten Antriebsendende 22 mit dem Antrieb 10 und mit einem zweiten Antriebsendende 24 mit dem als Bohrkrone ausgestalteten Werkzeug 30 verbunden. Die Antriebswelle 20 überträgt das durch den Antrieb 10 erzeugte Drehmoment auf die Bohrkrone 30. Die Bohrkrone 30 dient dazu durch das erzeugte Drehmoment und einen entsprechenden auf die Bohrkrone 30 ausgeübten Anpressdruck ein Bohrloch F in den Werkstoff W zu bohren.

Die Steuereinheit 40 ist in der Werkzeugmaschine 1 positioniert und mit dem Antrieb 10 verbunden. Die Steuereinheit 40 enthält einen ersten Sensor 42 zum Erfassen verschiedener Parameter der Werkzeugmaschine 1 sowie einen zweiten Sensor 44 zum Erfassen der Stromaufnahme durch den Antrieb 10. Die Steuereinheit 40 und die Sensoren 42, 44 dienen entsprechend dazu Parameter und insbesondere die Drehzahl sowie die Stromaufnahme des Antriebs 10 zu messen, zu steuern bzw. zu regeln.

Bei dem Kernbohrvorgang überträgt der Antrieb 10 der Werkzeugmaschine 1 ein Drehmoment über die Antriebswelle 20 auf das als Bohrkrone ausgebildete Werkzeug 30, welche daraufhin in eine Rotationsbewegung in Pfeilrichtung A oder B um die Achse C versetzt wird. Die Drehzahl des Antriebs 10 und der Bohrkrone 30 entspricht dabei zu Beginn des Bohrvorgangs einem relativ niedrigen Wert, d.h. einer Anbohrdrehzahl bzw. Anbohrgeschwindigkeit. Die mit der Anbohrgeschwindigkeit betriebene Bohrkrone 30 wird daraufhin in Pfeilrichtung D auf den Werkstoff W zubewegt. Die Werkzeugmaschine 1 wird dabei von einem nicht dargestellten Anwender gehalten und geführt. Nach Beendigung des Kernbohrvorgangs wird die Bohrkrone 30 in Pfeilrichtung E wieder aus dem in den Werkstoff W gebohrten Bohrloch F gezogen.

Alternativ ist es auch möglich, dass die Werkzeugmaschine 1 nicht als handgeführte Werkzeugmaschine 1, sondern als ständergeführte Werkzeugmaschine ausgestaltet ist. Hierbei ist die Werkzeugmaschine 1 an einem entsprechenden (nicht gezeigten) Werkzeugmaschinenständer positioniert und durch diesen während des Kernbohrvorgangs geführt.

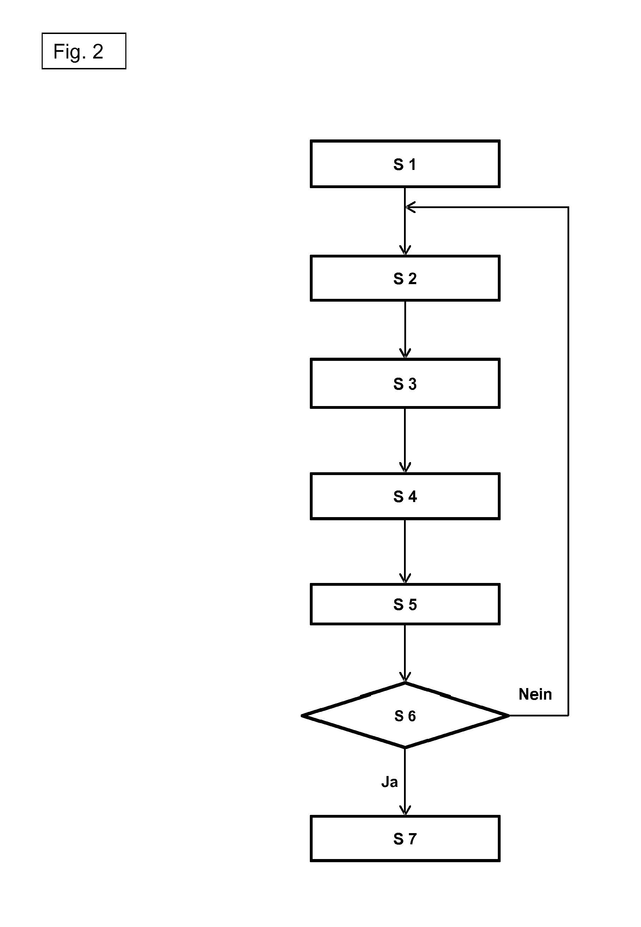

Nachfolgend wird anhand der Fig. 2 das Steuerungsverfahren einer handgeführten Kernbohrmaschine 1 beim Bearbeiten eines Werkstücks W beschrieben.

Wie in Fig. 2 dargestellt, erfolgt der Betrieb der Werkzeugmaschine 1 für einen Bohrvorgang zunächst in Schritt S1 mit dem Start des Antriebs 10 der Werkzeugmaschine 1. Hierbei wird in Schritt S2 die Drehzahl des Antriebs 10 auf einen Wert 1 festgelegt. Der Wert 1 für die Antriebsdrehzahl entspricht dabei einer Anbohrdrehzahl bzw. einer Anbohrgeschwindigkeit. Die Anbohrdrehzahl bzw. einer Anbohrgeschwindigkeit ist dabei wesentlich niedriger als die Drehzahl (nachfolgend als Drehzahl mit dem Wert 2), welche für den eigentlichen Kernbohrvorgang verwendet wird.

In Schritt S3 folgt eine Messung der Stromaufnahme des Antriebs 10 durch den Sensor 44, wenn der Antrieb 10 mit einer Antriebsdrehzahl gleich dem Wert 1, d.h. Anbohrdrehzahl, läuft. Die Messung der Stromaufnahme durch den Antrieb 10 erfolgt in Abhängigkeit einer Anzahl von Betriebsparametern, wie z.B. Temperatur der Kernbohrmaschine 1, alters- und abnutzungsbedingter Zustand der Kernbohrmaschine 1 bzw. des Werkzeugs 30, verwendete Bohrkronengröße, Art des zu bearbeitenden Werkstoffs W oder ähnliches. Das bedeutet, dass in der Steuereinheit 40 die gemessene Stromaufnahme in Abhängigkeit und im Zusammenhang mit diesen Betriebsparametern gemessen und gespeichert wird. Das Messen und Speichern der Stromaufnahme in Abhängigkeit der Betriebsparameter durch den Antrieb 10 erfolgt bei jedem (Neu-)Start der Kernbohrmaschine 1.

Anschließend wird in Schritt S4 ein Schwellenwert bzw. Grenzwert für die Stromaufnahme des Antriebs 10 festgelegt und in der Steuereinheit 40 gespeichert. Die Festlegung des Schwellenwerts bzw. Grenzwerts für die Stromaufnahme des Antriebs 10 erfolgt, wie bereits bei der Messung der Stromaufnahme durch den Antrieb 10, in Abhängigkeit einer Anzahl von Betriebsparametern, wie z.B. Temperatur der Kernbohrmaschine 1, alters- und abnutzungsbedingter Zustand der Kernbohrmaschine 1 bzw. des Werkzeugs 30, verwendete Bohrkronengröße, Art des zu bearbeitenden Werkstoffs W oder ähnliches.

Im darauffolgenden Schritt S5 wird die vom Anwender der Kernbohrmaschine 1 ausgeübte Anpresskraft, welche durch den (nicht gezeigten) Anwender von der einen Seite und durch den Werkstoff W von der anderen Seite auf das als Bohrkrone ausgestaltete Werkzeug 30 wirkt, erhöht, um nach der Anbohrphase (d.h. Antriebsdrehzahl mit Wert 1) nun die eigentliche Kernbohren (d.h. Antriebsdrehzahl mit Wert 2) durchzuführen. Da das Anpressen des Bohrkrone 30 auf einen zu bearbeitenden Werkstoff W mit einem höheren auf die Bohrkrone 30 wirkenden Widerstand verbunden ist, muss als Folge daraus die Antriebsleistung durch eine Erhöhung der Drehzahl sowie durch eine Erhöhung des Drehmoments entsprechend gesteigert werden, um einen ausreichenden Bohrvorschritt zu erreichen. Als Folge des Erhöhens der Antriebsleistung (d.h. Drehzahl und/oder Drehmoment) wird auch die Stromaufnahme des Antriebs 10 erhöht.

In Schritt S6 wird dann mit Hilfe des Sensors 44 in der Steuereinheit 40 überprüft, ob der festgelegte Schwellenwert für die Stromaufnahme des Antriebs 10 in Folge der Steigerung des Anpressdrucks und der damit verbundenen Erhöhung des Widerstands auf die Bohrkrone 30 für eine vorher festgelegte Zeitdauer überschritten wurde. Wie bereits vorstehend erwähnt, steht die Zeitdauer in Abhängigkeit mit dem festgelegten Schwellenwert. Das heisst, je höher der Schwellenwert ist, desto länger ist die Zeitdauer, die der Schwellenwert überschritten werden muss, bevor die Antriebsleistung gesteigert wird.

Für den Fall, dass der Schwellenwert für die Stromaufnahme des Antriebs 10 für die zuvor festgelegte Zeitdauer überschritten ist, wird in Schritt S7 die Drehzahl des Antriebs 10 auf einen Wert 2 gesteigert. Der Wert 2 der Antriebsdrehzahl entspricht dabei im Wesentlichen der Antriebsdrehzahl für den eigentlichen Kernbohrvorgang und liegt dabei über dem Wert 1 der Antriebsdrehzahl für den Anbohrvorgang.

Für den Fall, dass der Schwellenwert für die Stromaufnahme des Antriebs 10 nicht überschritten ist oder aber der Schwellenwert nicht für die zuvor festgelegte Zeitdauer überschritten ist, bleibt die Antriebsdrehzahl auf dem Wert 1 für den Anbohrvorgang.

## Patentansprüche

1. Verfahren zum Steuern einer Werkzeugmaschine (1), insbesondere eine handgeführte Kernbohrmaschine, enthaltend einen Antrieb (10) zum Antreiben eines Werkzeugs (30) und eine Steuereinheit (40), beim Bearbeiten eines Werkstücks (W) mit den Verfahrensschritten
- Festlegen der Antriebsdrehzahl auf einen ersten Wert;
- Messen eines ersten Stromaufnahmewertes des Antriebs (10);
- Festlegen eines Schwellenwertes für die Stromaufnahme des Antriebs (10); und
- Erhöhen der Antriebsdrehzahl auf einen zweiten Wert, wenn die Stromaufnahme des Antriebs (10) aufgrund einer Erhöhung der Antriebslast den Schwellenwert übersteigt.

2. Verfahren nach Anspruch 1,
**gekennzeichnet durch** ein Erhöhen der Antriebslast mittels Erhöhung einer Anpresskraft auf das Werkzeug (W).

3. Verfahren nach Anspruch 1 oder 2,
**dadurch gekennzeichnet, dass** das Festlegen des Schwellenwertes in Abhängigkeit wenigstens eines Parameters der Werkzeugmaschine (1) erfolgt.

4. Verfahren nach wenigstens einem der Ansprüche 1 bis 3,
**dadurch gekennzeichnet, dass** das Erhöhen der Antriebsdrehzahl auf einen zweiten Wert in Abhängigkeit zu der Dauer des Überschreitens des Schwellenwertes und der Größe des Schwellenwertes steht.

5. Werkzeugmaschine (1) zur Anwendung des Verfahrens nach wenigstens einem der Ansprüche 1 bis 4, enthaltend
- einen Antrieb (10) zum Antreiben eines Werkzeugs (30); und
- eine Steuereinheit (40) zur Steuerung wenigstens der Antriebsdrehzahl.
